# FASCICULE DE BREVET EUROPEEN

(11) **EP 1 069 289 B1**
(45) Date de publication et mention de la délivrance du brevet: **02.07.2003**
(21) Numéro de dépôt: 00401996.4
(22) Date de dépôt: 11.07.2000
(51) Int. Cl.: F01N 7/18, F01N 7/14, F16L 27/10, F16L 59/153

(54) **Perfectionnement à un flexible de découplage monte dans une ligne d'échappement d'un moteur de véhicule automobile**
Verbesserung zu einem Entkopplungselement in einer Auspuffanlage eines Kraftfahrzeugmotors
Improvement to a flexible decoupling joint in an exhaust line of a motor vehicle engine

(30) Priorité: 12.07.1999 FR 9908998
(43) Date de publication de la demande: 17.01.2001
(73) Titulaire: HUTCHINSON, 75008 Paris (FR)
(72) Inventeur: Boisseau, Vincent, 63200 Cellule (FR); Simon, Jean-Michel, 92320 Chatillon (FR); Dolez, Marc, 45160 Olivet (FR); Mahin, Daniel, 37510 Savonnieres (FR)
(74) Mandataire: Doireau, Marc

(56) Documents cités:
- EP-A- 0 327 148
- DE-C- 3 600 028
- FR-A- 2 758 588
- US-A- 4 183 557
- US-A- 5 437 479

## Description

L'invention concerne un flexible de découplage monté dans une ligne d'échappement d'un moteur de véhicule automobile.

D'une manière générale, une ligne d'échappement d'un moteur de véhicule automobile est montée en sortie du collecteur d'échappement du moteur. Cette ligne comprend généralement un ou plusieurs "pots" (catalytique, de détente, acoustique) constituant autant de masses le long d'une tubulure en un ou plusieurs morceaux rigidement raccordés. L'ensemble, suspendu à la caisse du véhicule par des liaisons modérément souples qui sont formées par des sangles ou des plots de suspension généralement à base d'élastomère, doit supporter les débattements du moteur liés à des accélérations verticales, aux changements brutaux de vitesse, aux dilatations thermiques, aux tolérances de montage,...

Pour ces raisons, une ligne d'échappement comprend le plus souvent un raccord tubulaire souple dénommé "flexible de découplage" qui évite la détérioration ou la destruction de la ligne d'échappement par les différentes sollicitations précitées. Ce flexible permet d'obtenir la souplesse nécessaire au découplage vibratoire du moteur par rapport à la ligne d'échappement d'une part et à la caisse d'autre part, et améliore le confort dans l'habitacle du véhicule.

D'une manière générale, le flexible doit supporter le flux de gaz chauds qui peut atteindre voire dépasser 900°C en continu et les conditions extérieures auxquelles la ligne d'échappement est soumise. Par contre, le flexible ne doit pas perturber le fonctionnement de certains éléments de la ligne d'échappement, en particulier pour les motorisations à essence, il doit interdire toute entrée d'air dans le catalyseur.

On connaît des flexibles qui sont constitués par des tubes en tôle inoxydable de 0,3mm à 0,5mm, la tôle étant ondulée en forme de soufflet avec un gainage interne et une tresse ou tricot externe. Cependant, de tels flexibles sont raides avec des modes vibratoires marqués et bruyants. En outre, ils ne supportent aucune tension, aucune torsion et aucun dépassement de déformations admissibles en flexion, en cisaillement ou en compression.

D'une manière générale, le niveau d'étanchéité exigé à l'amont du catalyseur impose l'utilisation d'une enveloppé fermée de façon complète et étanche, sinon il faudrait que les éléments d'une structure discontinue soient extrêmement serrés, et cet état de chose est difficile à maintenir sous toutes les déformations du flexible. En outre, les déformations du flexible imposent un plissement et des croisements de plis, et les éléments en feuilles ou tubes continus doivent être extensibles, sous peine de destruction mécanique.

Or, les matériaux souples susceptibles de satisfaire au niveau d'étanchéité exigé, les élastomères par exemple, sont limités en température. Il faut donc un élastomère thermorésistant, de type silicone ou analogue et une protection thermique.

La difficulté de l'isolation thermique est alors aggravée par les contraintes d'encombrement, le diamètre interne du flexible ne pouvant être réduit sans gêner fortement l'écoulement du flux des gaz, et le diamètre externe est limité par l'environnement très encombré de la ligne. Par ailleurs, la conduction au niveau des raccords fait de la jonction étanche, entre ceux-ci et l'enveloppe élastomère, la zone la plus chaude pour cette dernière. Enfin, les feutres réfractaires usuels ont une conductivité thermique fortement croissante quant la température s'élève.

Selon le document FR-A-2 676 502 le flexible de découplage est constitué en un matériau élastomère thermorésistant de type silicone, protégé intérieurement par des matériaux isolants, réfractaires et fibreux. La nécessité d'un minimum de tenue en flexion nécessite cependant une très forte épaisseur de silicone (de l'ordre de 7mm), ce qui dégrade considérablement l'effet relatif de la protection thermique et la souplesse que l'on peut attendre en compression.

Selon le document EP-A-0 145 020, le flexible de découplage comprend une ossature métallique cylindrique qui sert de support pour un ensemble de couches superposées, en particulier une couche interne de tissus à base de fibres minérales, une couche d'étanchéité constituée d'un feuillard métallique, une couche d'isolation thermique et une couche externe de protection. A chaque extrémité du flexible, l'ensemble des couches est écrasé au moyen de coutures effectuées avec un fil métallique.

Selon le document FR-A-2 758 588, le flexible de découplage est constitué par un empilement fonctionnel de matériaux qui sont de préférence conformés en soufflet avec une couche interne, une couche barrière, une couche d'isolation thermique et une couche externe étanche en élastomère, le tout étant pris entre deux ressorts hélicoïdaux alternés interne et externe.

A chacune de leurs extrémités, les deux ressorts présentent des spires jointives pour constituer des surfaces rigides. Ces surfaces, qui s'étendent sur une longueur d'au moins 1cm, sont utilisées pour permettre le raccordement du flexible aux extrémités des deux tubulures de la ligne d'échappement entre lesquelles le flexible est intercalé. Un tel raccordement peut être réalisé au moyen de colliers rigides ou par sertissage, par exemple.

Cependant, pour obtenir à la fois une bonne étanchéité et une bonne tenue mécanique, l'ensemble des couches sous l'élastomère, y compris l'isolant déjà peu épais compte tenu de l'encombrement disponible, est fortement écrasé par le sertissage et perd ainsi de son efficacité. En l'absence de joint étanche, le serrage n'assure pas une étanchéité suffisante pour une application aux moteurs catalysés par exemple.

La proximité du raccord avec la tubulure, généralement mince et métallique, aggrave par conduction l'échauffement de l'élastomère dans cette zone, en particulier lorsqu'une continuité est établie pour l'étanchéité.

Compte tenu de la structure des flexibles de découplage selon l'art antérieur évoqué précédemment et des différentes contraintes qu'ils sont amenés à subir, un but de l'invention est de concevoir un flexible de découplage qui ne présente pas les inconvénients de l'art antérieur d'une part, et qui soit en mesure de satisfaire au mieux aux conditions qu'il doit remplir pour pallier les effets des contraintes inhérentes aux conditions de fonctionnement de la ligne d'échappement d'autre part.

En d'autres termes, un but de l'invention est de concevoir un flexible de découplage souple qui soit capable de supporter un flux gazeux à haute température, et qui est plus particulièrement destiné à assurer un découplage mécanique et vibratoire dans une ligne d'échappement.

A cet effet, l'invention propose un flexible de découplage destiné à être monté dans une ligne d'échappement d'un moteur de véhicule automobile, ce flexible comprenant notamment une partie mécanique ayant deux zones d'extrémité destinées à être raccordées à la ligne d'échappement, et une partie étanchéité isolée thermiquement de l'intérieur par une partie isolation et qui s'étend sur sensiblement sur toute la longueur de la partie mécanique du flexible, et qui est caractérisé en ce que la partie étanchéité comprend une zone centrale formée d'une couche réalisée en un matériau souple et thermiquement résistant, et de deux zones d'extrémité rigides respectivement raccordées aux deux zones d'extrémité de la partie mécanique, la partie étanchéité du flexible formant une enveloppe continue, fermée et étanche.

Selon une autre caractéristique de l'invention, les parties mécanique et étanchéité sont dissociées l'une de l'autre, de manière à remplir leurs fonctions respectives indépendamment l'une de l'autre.

La couche ou paroi souple de la partie étanchéité du flexible est réalisée en un matériau élastomère tel du silicone qui est thermiquement protégée radialement par la partie isolation et axialement par les deux parties d'extrémité de la partie étanchéité.

Les deux partie d'extrémité de la partie étanchéité sont constituées par deux coiffes longues et minces, de préférence réalisées en un matériau thermiquement peu conducteur, tel de l'acier inoxydable par exemple, ces coiffes ayant pour fonction de réduire la conduction de chaleur vers la couche souple d'une part, et de participer à la réalisation de la partie étanchéité sous la forme d'une enveloppe continue, fermée et étanche.

Selon un mode de réalisation de la partie étanchéité :
- la paroi souple a une épaisseur de l'ordre de 0,5 à 3mm, est plissé et renforcée par des spires flexibles par exemple pour assurer une meilleure tenue mécanique à la pression d'un flux gazeux, et
- chaque coiffe est relativement longue et mince, avec la présence éventuelle d'ailettes, de plis ou de prolongements conducteurs pour assurer une plus grande surface d'évacuation de la chaleur, tandis que la minceur et la faible conductivité des coiffes limitent le flux conducteur venant des deux zones chaudes de raccordement du flexible à la ligne d'échappement.

D'une manière générale, la partie d'isolation radiale de la paroi souple de la partie étanchéité s'étend sous les coiffes pour les isoler, et elle est constituée à partir d'un matériau isolant d'une épaisseur de l'ordre de 5 à 20mm.

La partie mécanique du flexible peut être constituée suivant différentes structures dont certaines seront décrites plus loin, sachant que cette partie mécanique ne constitue pas en soi une caractéristique essentielle de l'invention.

Selon un avantage important de l'invention, le fait de raccorder le flexible de découplage à la ligne d'échappement au niveau de la partie mécanique du flexible, permet d'éviter un écrasement des parties d'isolation thermique et d'étanchéité d'une part, et limite un transfert de chaleur vers ces parties d'autre part.

D'autres avantages, caractéristiques et détails de l'invention ressortiront du complément de description qui va suivre en référence à des dessins annexés, donnés uniquement à titre d'exemple et dans lesquels :
- la figure 1 est une vue schématique d'une ligne d'échappement classique d'un moteur de véhicule automobile, qui comprend un flexible de découplage,
- la figure 2 est une demi-vue en coupe longitudinale d'un premier mode de réalisation d'un flexible de découplage selon l'invention,
- les figures 3 et 4 sont deux demi-vues en coupe de deux autres modes de réalisation d'un flexible de découplage selon l'invention.

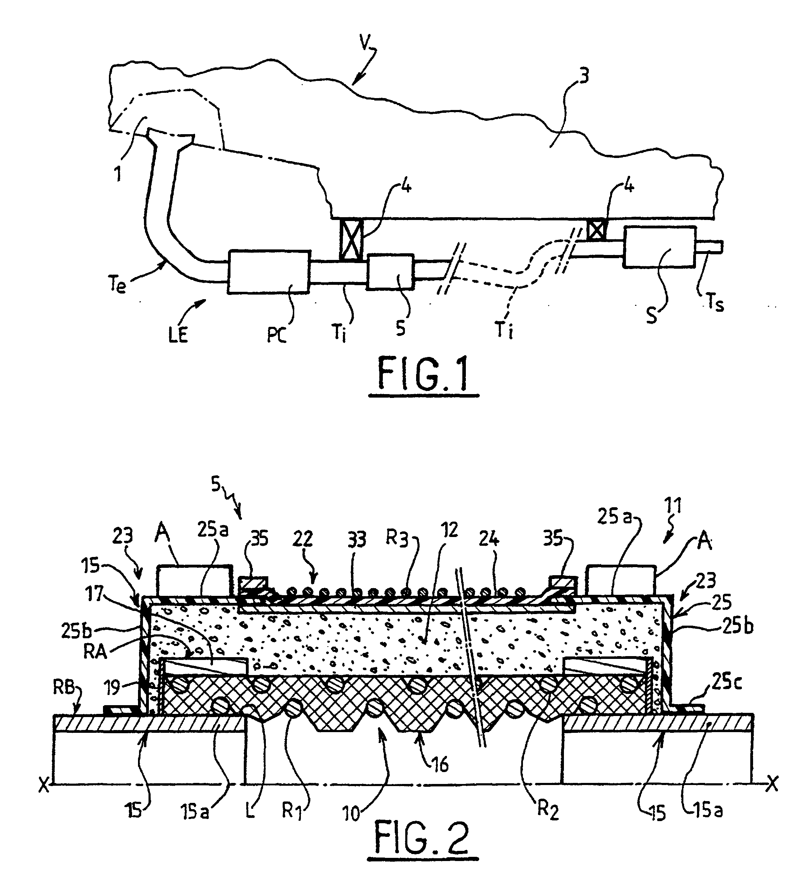

D'une manière générale, une ligne d'échappement LE pour un moteur de véhicule automobile V, comme celle illustrée sur la figure 1, est montée à la sortie du collecteur d'échappement 1 du moteur.

Cette ligne d'échappement LE comprend par exemple une tubulure amont ou d'entrée Te, un pot catalytique PC, une ou plusieurs tubulures intermédiaires Ti, un silencieux S et une tubulure aval ou de sortie Ts. Les différents éléments constitutifs de cette ligne LE sont métalliques et raccordés entre eux par des demi-colliers métalliques (non représentés). La ligne LE est suspendue à la caisse 3 du véhicule V par des moyens 4 tels que des sangles ou des plots de suspension en élastomère.

A l'heure actuelle, la structure de ce type de ligne d'échappement LE est complétée par un flexible de découplage 5 pour les raisons évoquées en préambule.

Un flexible de découplage 5 selon l'invention est une structure tubulaire d'axe X-X qui comprend notamment au moins une partie mécanique 10 qui est destinée à être raccordée à deux tubulures adjacentes de la ligne d'échappement LE, et une partie étanchéité 11 qui s'étend sur sensiblement toute la longueur de la partie mécanique 10 d'une part, et qui est isolée thermiquement de l'intérieur par une partie isolation 12 d'autre part.

Selon un premier mode de réalisation illustré sur la figure 2, la partie mécanique 10 comprend dans le sens axial deux zones d'extrémités rigides et continues 15 sous la forme de deux embouts tubulaires de raccordement métalliques 15a, en acier inoxydable par exemple, qui sont réunis l'un à l'autre par une liaison mécanique souple 16 qui permet de supporter des débattements angulaires.

La-liaison souple 16 de la partie mécanique 10 forme une enveloppe cylindrique interne qui est au contact des gaz d'échappement et réalisée à partir d'un matériau qui doit résister thermiquement et mécaniquement. Selon ce premier mode de réalisation, cette liaison souple 16 est réalisée par des fibres ou fils d'acier inoxydable sous la forme d'un tissu, d'une tresse, d'un tricot,..., sachant qu'une structure orientée à fibres longues se tenant les unes aux autres est préférable. A titre d'exemple, un tissu en fibres d'acier inoxydable orientées à 45° forme un matelas mince, dense et résistant qui peut convenir.

Avantageusement, on confère à la liaison souple 16 une forme en soufflet en l'emprisonnant entre deux ressorts alternés R1 et R2. Le soufflet est à faible amplitude et à pas court qui sont proportionnés à son épaisseur. A titre d'exemple, la liaison souple 16 peut avoir un diamètre interne de l'ordre de 40mm à 60mm, une épaisseur de l'ordre de 5mm à 10mm et s'étendre sur une longueur de l'ordre de 40mm à 100mm, alors que les ressorts R1 et R2 peuvent être constitués avec des fils d'acier inoxydable d'un diamètre de l'ordre de 1mm à 3mm et montés suivant un pas de l'ordre de 5mm à 20mm.

Selon ce premier mode de réalisation donné à titre d'exemple, chaque embout de raccordement 15a comprend une partie annulaire formant un raccord RA avec la liaison souple 16 de la partie mécanique 10, et une partie tubulaire formant un raccord RB avec une tubulure de la ligne d'échappement LE.

Plus précisément, le raccord RA comprend un logement annulaire L1 qui est délimité par une paroi formée par une partie d'extrémité de l'embout 15a et une paroi cylindrique externe 17 coaxiale à l'embout 15a, et par une paroi transversale annulaire 19 formant le fond du logement L. La paroi externe 17 du logement L est séparée de l'embout 15a d'une distance correspondant sensiblement à l'épaisseur de la liaison souple 16 de la partie mécanique 10. Le logement L s'étend sur une longueur de l'ordre de 20mm à 50mm, de manière à recevoir une partie d'extrémité de la liaison souple 16 sur cette longueur. La fixation entre le raccord Ra et la liaison souple 16 est réalisée par sertissage par exemple, la paroi cylindrique externe 17 jouant le rôle d'un tube de sertissage qui ne forme qu'une seule pièce avec l'embout 15a.

En variante, la paroi cylindrique externe 17 du logement L pourrait être dissociée de chaque embout de raccordement 15a pour former un tube de sertissage indépendant que l'on viendrait rapporter, avant sertissage, sur chaque partie d'extrémité de la liaison souple 16 de la partie mécanique 10.

Le raccord RB de chaque embout 15a est formé par l'autre partie d'extrémité de l'embout 15a et dont le diamètre peut être adapté, si nécessaire, à celui de la tubulure de la ligne d'échappement LE à laquelle il sera raccordé par sertissage, soudage ou analogue.

Ainsi, selon l'invention, le flexible de découplage 5 est fixé à la ligne d'échappement LE par l'intermédiaire de sa partie mécanique 10 et ce, indépendamment du mode d'assemblage des parties d'étanchéité 11 et d'isolation thermique 12, de manière à ce que seule la partie mécanique 10 assure la transmission des efforts auxquels la ligne d'échappement LE est soumise.

La partie étanchéité 11 du flexible 5 comprend une zone centrale souple 22 et deux zones d'extrémité rigides 23, cet ensemble étant destiné à former une enveloppe continue, fermée et étanche qui entoure le flexible.

La zone centrale souple 22 est par exemple constituée par au moins une couche ou paroi 24 en un matériau élastomère, tel du silicone, de faible épaisseur de l'ordre de 0,5mm à 2mm. Cette paroi 24 peut être renforcée par une structure aérée de type tricot et avantageusement thermiquement conductrice, qui peut être réalisée en verre.

La paroi souple 24 est avantageusement renforcée par un élément de renfort mécanique pour assurer une meilleure tenue à la pression du flux gazeux. Ce renfort peut consister à donner une structure plissée à la paroi souple 24 par la présence de reliefs nervurés ou par l'ajout d'éléments tels un ressort léger R3 dont le pas sera court pour avoir une faible amplitude de plis. Ce ressort R3 peut être constitué par un fil d'acier inoxydable d'un diamètre de l'ordre de 0,5mm à 1mm et monté suivant un pas de l'ordre de 4mm à 10mm autour de la zone centrale souple 22.

Chaque zone d'extrémité 23 de la partie étanchéité 11 est constituée par une coiffe 25 qui est aussi longue et mince que possible, et en un matériau rigide, si possible peu conducteur thermiquement mais surtout compatible avec les dilatations et l'environnement thermique et mécanique. De préférence, chaque coiffe 25 est réalisée en un matériau qui a sensiblement le même coefficient de dilatation thermique que l'embout tubulaire 15a sur lequel elle est fixée, en acier inoxydable par exemple, et peut présenter une forme ondulée ou fortement plissée.

La fonction de ces coiffes 25, en plus de former avec la couche souple 24 une enveloppe étanche, est d'assurer une isolation axiale pour limiter la température de la couche 24 et donc sa détérioration.

Selon un exemple de réalisation, chaque coiffe 25 est constituée par une paroi cylindrique 27 qui est partiellement fermée à une extrémité par une paroi transversale annulaire 29.

La partie étanchéité 11 est isolée thermiquement de l'intérieur ou radialement par la partie isolation 12 qui forme un élément tubulaire qui s'étend au moins sur toute la longueur de la partie étanchéité 11. Cet élément est par exemple constitué par un matelas constitué d'une épaisseur suffisante de fibres réfractaires longues, d'éléments fibreux en feuilles ou lamelles de mica ou d'acier inoxydable par exemple, de poudre telle une silice nanométrique que l'on peut ensacher sous vide, l'épaisseur de ce matelas étant de l'ordre de 5 à 20mm.

La partie isolation 12 s'étend sur une longueur supérieure à celle de la liaison souple 16 de la partie mécanique 10, de manière à entourer non seulement cette liaison souple 16 mais également les raccords RA des embouts de raccordement 15a.

Les deux coiffes 25 enveloppent toute la partie isolation thermique 12. Avantageusement, les deux coiffes 25 viennent respectivement s'emboîter sur les raccords RB des deux embouts de raccordement 15a, de manière à envelopper les raccords RA qui supportent la liaison souple 16 de la partie mécanique 10 du flexible 5. La partie isolation thermique 12 qui s'étend au-delà de la liaison souple 16 de la partie mécanique 10 vient ainsi au contact avec le fond de chaque coiffe 25.

Enfin, chaque coiffe d'assemblage 25 est fixée au raccord RB de l'embout de raccordement associé 15a par soudage par exemple. Avantageusement, chaque coiffe d'assemblage 25 se prolonge axialement, du côté de sa paroi annulaire 29 formant le fond de la coiffe, par une partie tubulaire 31 d'un diamètre intérieur à peine supérieur au diamètre extérieur du raccord RB de l'embout de raccordement associé 15, pour faciliter son montage et sa fixation sur ledit embout 15.

La zone centrale souple 22 de la partie étanchéité 11 peut être également complétée par un élément 33 déformable et thermiquement conducteur qui est interposé entre la partie d'isolation thermique 12 et la paroi souple 24, ou qui entoure cette dernière. Cet élément 33 peut être une couche en aluminium par exemple, avec une épaisseur de l'ordre de 0,5mm, et qui pénètre à l'intérieur de chaque coiffe 25, alors que la paroi souple 24 vient recouvrir en partie les coiffes 25 pour y être fixée au moyen d'un collier de sertissage 35 par exemple. Cet élément 33 pourrait être réalisé également sous la forme d'un tricot

Avantageusement, les coiffes 25 présentent la plus grande surface d'évacuation de chaleur possible. A cet effet, on peut prévoir la présence d'ailettes de refroidissement A, de plis ou de prolongements thermiquement conducteurs, et/ou d'intercalaires isolants entre les coiffes 25 et la paroi souple 22, pour limiter le flux de chaleur venant des zones chaudes qui sont situées aux deux extrémités du flexible.

A titre d'exemple :
- la paroi souple 24 présente un diamètre externe qui est de l'ordre de 0,5 à 2 ou 3 fois le diamètre externe de la tubulure d'échappement, une épaisseur de l'ordre de 0,5 à 3mm, un plissage suivant un pas de l'ordre de 3 à 10 fois son épaisseur et une amplitude de l'ordre de 0,3 à 5 fois le pas, et une longueur de l'ordre de 30 à 100mm ou 0,5 à 1,5 fois son propre diamètre externe, et
- les coiffes 25 sont réalisées en acier inoxydable réfractaire, avec une épaisseur de l'ordre de 0,2 à 1mm, et une longueur suffisante pour faire décroître suffisamment la température au niveau de la paroi souple 24, cette longueur étant de l'ordre de 0,5 à 2 ou trois fois le diamètre externe de la tubulure, c'est-à-dire de l'ordre de 40 à 100 mm.

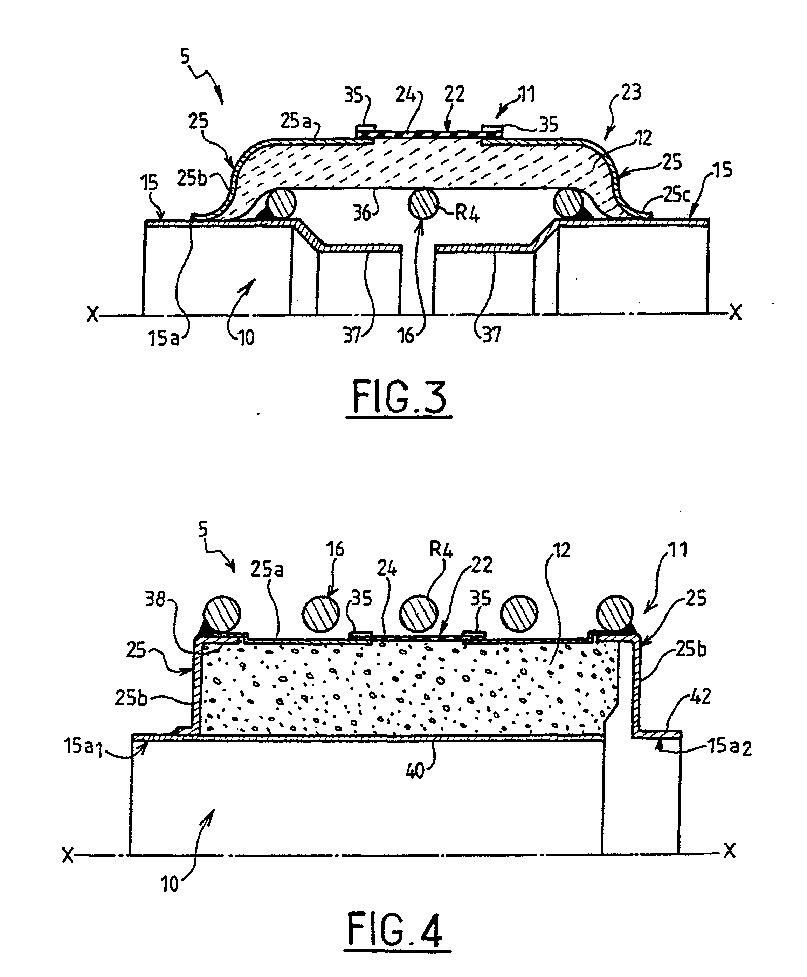

Selon un deuxième mode de réalisation illustré sur la figure 3, la liaison souple 16 qui relie les deux embouts de raccordement 15a de la partie mécanique 10 du flexible, est constituée par un ressort R4 en fil métallique épais de l'ordre de 5mm à 14mm, qui a essentiellement pour fonction de participer à la transmission éventuelle d'efforts.

La partie étanchéité 11 du flexible 5 est alors complétée par une enveloppe interne 36 sous la forme d'une feuille en acier inoxydable de faible épaisseur qui est intercalée entre le ressort R4 et la partie isolation thermique 12.

Chaque embout de raccordement 15a peut être un simple élément tubulaire sur lequel les deux extrémités du ressort R4 sont soudées pour assurer une continuité mécanique.

Avantageusement, chaque embout de raccordement 15a peut se prolonger axialement, à l'intérieur du flexible, par deux éléments tubulaires 37 axialement alignés qui forment un déflecteur.

En variante, ce déflecteur peut être constitué par un seul élément tubulaire prolongeant l'embout de raccordement amont 15a en considération la direction d'écoulement des gaz d'échappement.

Selon un troisième mode de réalisation illustré sur la figure 4, la liaison souple 16 de la partie mécanique 10 du flexible 5 est également constituée par un ressort R4 du même type que celui illustré sur la figure 3, mais qui est monté à l'extérieur de la partie étanchéité 11 pour entourer celle-ci et la partie isolation 12 qui lui est associée.

Les parties axiale 25a et transversale 25b de chaque coiffe 25 peuvent former deux éléments fixés l'un à l'autre par soudage, la partie transversale 25b étant plus épaisse que la partie axiale 25a. Les deux extrémités du ressort R4 sont soudées sur un rebord 38 de la partie transversale 25 de chaque coiffe 25.

La partie étanchéité 11 est complétée par une enveloppe interne 40 de faible épaisseur en acier inoxydable qui est au contact des gaz d'échappement. Cette enveloppe 40 est donc entourée par la partie isolation 12. Une extrémité axiale de l'enveloppe 40 est fixée par soudage à un embout de raccordement rigide 15a1 de la partie mécanique 10 ou peut former qu'une seule pièce avec cet embout 15a1 mais avec une moindre épaisseur, car elle n'a pas à transmettre des efforts. Par contre, l'autre extrémité axiale de l'enveloppe 40 est libre et n'est pas raccordée à l'autre embout de raccordement 15a2 qui peut être avantageusement formé par un rebord 42 de la partie annulaire transversale 25b de la coiffe associée.

Selon ce troisième mode de réalisation, la partie transversale 25b de chaque coiffe 25 forme une partie de la partie mécanique 10 du flexible 5 pour assurer la continuité mécanique entré les embouts de raccordement 15a1,15a2 et le ressort R4, et c'est pour cette raison qu'elle est plus épaisse que la partie axiale 25a.

Le flexible selon ce troisième mode de réalisation présente une certaine dissymétrie par rapport aux deux modes de réalisation précédents. Bien entendu, la partie étanchéité 11 du flexible 5 selon les figures 3 et 4 peut présenter les mêmes caractéristiques que celles décrites et illustrées sur la figure 2, notamment en ce qui concerne la structure de la liaison centrale souple 22.

## Revendications

1. Flexible de découplage destiné à être monté dans une ligne d'échappement (LE) d'un moteur de véhicule automobile, ce flexible (5) comprenant notamment une partie mécanique (10) ayant deux zones d'extrémité rigides (15) destinées à être raccordées à la ligne d'échappement (LE), et une partie étanchéité (11) isolée thermiquement de l'intérieur par une partie isolation (12), la partie étanchéité s'étendant sur sensiblement toute la longueur de la partie mécanique (10) du flexible et comprenant au moins une zone centrale (22) formée d'une couche où paroi (24) réalisée en un matériau souple et thermiquement résistant, **caractérisé en ce que**, pour former une enveloppe continue, fermée et étanche, la partie étanchéité comprend également deux zones d'extrémité rigides (23) longues et minces ayant pour fonction de protéger thermiquement la zone centrale (22) en l'isolant des zones chaudes de raccordement du flexible à la ligne d'échappement, et qui sont respectivement raccordées à la zone centrale (22) d'une part et aux deux zones d'extrémité rigides (15) de la partie mécanique (10) d'autre part.

2. Flexible de découplage selon la revendication 1, **caractérisé en ce que** les parties mécanique (10) et étanchéité (11) sont dissociées l'une de l'autre, de manière à remplir leurs fonctions respectives indépendamment l'une de l'autre.

3. Flexible de découplage selon la revendication 1 ou 2, **caractérisé en ce que** la couche souple (24) de la zone centrale de la partie étanchéité (11) a une épaisseur de l'ordre de 0,5 mm à 2 mm.

4. Flexible de découplage selon l'une quelconque des revendications 1 à 3, **caractérisé en ce que** la couche souple (24) de la zone centrale de la partie étanchéité est réalisée en un matériau élastomère tel du silicone.

5. Flexible de découplage selon l'une quelconque des revendications précédentes, **caractérisé en ce que** la couche souple (24) de la zone centrale de la partie étanchéité (11) est renforcée par une structure aérée de type tricot.

6. Flexible de découplage selon la revendication 5, **caractérisé en ce que** le renfort de la couche (24) est en matériau thermiquement conducteur.

7. Flexible de découplage selon l'une quelconque des revendications précédentes, **caractérisé en ce que** la couche souple (24) de la zone centrale de la partie étanchéité (11) est légèrement plissée.

8. Flexible de découplage selon la revendication 7, **caractérisé en ce qu'**un ressort (R3) entoure la couche souple (24) pour lui donner une forme plissée.

9. Flexible de découplage selon l'une quelconque des revendications précédentes, **caractérisé en ce qu'**un élément (33) déformable et thermiquement conducteur entoure, intérieurement ou extérieurement, la couche souple (24).

10. Flexible de découplage selon l'une quelconque des revendications précédentes, **caractérisé en ce que** la paroi souple (24) a un diamètre externe de l'ordre de 0,5 à 2 ou 3 fois le diamètre externe de la tubulure d'échappement dans laquelle le flexible est destiné à être monté, et une longueur de l'ordre de 30 à 100mm ou 0,5 à 1,5 fois son propre diamètre externe.

11. Flexible de découplage selon l'une quelconque des revendications précédentes, **caractérisé en ce que** chaque zone d'extrémité (23) de la partie étanchéité est réalisée sous la forme d'une coiffe (25).

12. Flexible de découplage selon la revendication 11, **caractérisé en ce que** chaque coiffe (25) a une épaisseur de l'ordre de 0,2 à 1mm et une longueur de l'ordre de 0,5 à 2 fois le diamètre externe de la tubulure d'échappement dans laquelle le flexible est destiné à être monté.

13. Flexible de découplage selon la revendication 11 ou 12, **caractérisé en ce que** chaque coiffe (25) supporte des ailettes de refroidissement (A).

14. Flexible de découplage selon l'une quelconque des revendications 11 à 13, **caractérisé en ce que** chaque coiffe (25) est réalisée en un matériau peu thermiquement conducteur.

15. Flexible de découplage selon l'une quelconque des revendications précédentes, **caractérisé en ce que** les zones d'extrémité (15) de la partie mécanique (10) du flexible sont constituées par deux embouts tubulaires métalliques (15a) qui sont réunis l'un à l'autre par une liaison centrale souple (16) permettant des débattements angulaires du flexible.

16. Flexible de découplage selon la revendication 15, **caractérisé en ce que** la partie étanchéité (11) s'étend axialement au-delà de la liaison centrale souple (16).

17. Flexible de découplage selon la revendication 15 ou 16, **caractérisé en ce que** la liaison souple (16) de la partie mécanique (10) du flexible inclut un tissu de fibres ou de fils d'acier inoxydable, pour former un matelas mince, dense et résistant d'une épaisseur de l'ordre de 5mm à 10mm.

18. Flexible de découplage selon l'une quelconque des revendications 15 ou 16, **caractérisé en ce que** la liaison souple (16) de la partie mécanique (10) du flexible inclut une structure orientée à fibres longues en acier inoxydable par exemple.

19. Flexible de découplage selon l'une quelconque des revendications 15 ou 16, **caractérisé en ce que** la liaison souple (16) de la partie mécanique (10) du flexible est emprisonnée entre deux ressorts (R1,R2) alternés pour lui donner une forme en soufflet.

20. Flexible de découplage selon la revendication 19, **caractérisé en ce que** la liaison souple (16) de la partie mécanique (10) du flexible est constituée par un ressort (R4) en fil métallique épais de l'ordre de 7mm à 14mm.

21. Flexible de découplage selon la revendication 20, **caractérisé en ce que** le ressort (R4) est situé du côté intérieur du flexible et est entourée par la partie isolation thermique (12).

22. Flexible de découplage selon la revendication 21, **caractérisé en ce qu'**une enveloppe interne (36) sous la forme d'une feuille en acier inoxydable de faible épaisseur est intercalée entre le ressort (R4) et la partie isolation thermique (12).

23. Flexible de découplage selon la revendication 21 ou 22, **caractérisé en ce que** le ressort (R4) entoure un déflecteur tubulaire (37) qui est au contact des gaz d'échappement.

24. Flexible de découplage. selon la revendication 22, **caractérisé en ce que** le déflecteur (37) est en deux parties respectivement raccordées aux deux zones d'extrémité rigides (15) du flexible.

25. Flexible de découplage selon la revendication 23, **caractérisé en ce que** le déflecteur (37) est en une partie qui est raccordée à l'une des zones d'extrémité rigides (15) du flexible.

26. Flexible de découplage selon la revendication 20, **caractérisé en ce que** le ressort (R4) est situé du côté extérieur du flexible et entoure la partie d'étanchéité(11).

27. Flexible de découplage selon la revendication 26, **caractérisé en ce que** la partie étanchéité (11) est complétée par une enveloppe interne (40) de faible épaisseur qui est entourée par la partie isolation (12) et fixée à l'une des zones d'extrémité rigides (15a1) du flexible.

28. Flexible de découplage selon l'une quelconque des revendications précédentes, **caractérisé en ce que** la partie d'isolation thermique (11) est réalisée à partir d'un matériau isolant d'une épaisseur de l'ordre de 5mm à 20mm, et s'étend sur toute la longueur de la partie étanchéité (11) du flexible.

## Patentansprüche

1. Flexibles Entkopplungselement, bestimmt in eine Auspuffanlage (LE) eines Kraftfahrzeugmotors eingebaut zu werden, wobei dieses flexible Element (5) insbesondere einen mechanischen Teil (10) mit zwei starren Endzonen (15), dazu bestimmt, mit der Auspuffanlage (LE) verbunden zu werden, und einen Dichtungsteil (11) umfasst, der von dem Inneren durch einen Isolationsteil (12) thermisch isoliert ist, wobei der Dichtungsteil sich im Wesentlichen genau auf der ganzen Länge des mechanischen Teils (10) des flexiblen Elementes erstreckt und mindestens eine zentrale Zone (22) umfasst, gebildet aus einer Schicht oder Wand (24), die in einem biegsamen und hitzebeständigen Material ausgeführt ist, **dadurch gekennzeichnet, daß** um eine ununterbrochene, geschlossene und dichte Umhüllung zu bilden, der Dichtungsteil ebenfalls zwei lange und dünne starre Endzonen (23) umfasst, die zur Aufgabe haben, die zentrale Zone (22) thermisch zu schützen, indem sie sie von den heißen Zonen zur Verbindung des flexiblen Elementes mit der Auspuffanlage isolieren, und die jeweils einerseits mit der zentralen Zone (22) und andererseits mit den beiden starren Endzonen (15) des mechanischen Teils (10) verbunden sind.

2. Flexibles Entkopplungselement gemäß Anspruch 1, **dadurch gekennzeichnet, daß** der mechanische (10) und der Dichtungsteil (11) voneinander getrennt sind, so daß sie ihre jeweiligen Aufgaben unabhängig voneinander erfüllen können.

3. Flexibles Entkopplungselement gemäß Anspruch 1 oder 2, **dadurch gekennzeichnet, daß** die biegsame Schicht (24) der zentralen Zone des Dichtungsteils (11) eine Dicke in der Größenordnung von 0,5 mm bis 2 mm aufweist.

4. Flexibles Entkopplungselement gemäß einem der Ansprüche 1 bis 3, **dadurch gekennzeichnet, daß** die biegsame Schicht (24) der zentralen Zone des Dichtungsteils in einem elastomeren Material, wie Silikon, ausgeführt ist.

5. Flexibles Entkopplungselement gemäß einem der vorhergehenden Ansprüche, **dadurch gekennzeichnet, daß** die biegsame Schicht (24) der zentralen Zone des Dichtungsteils (11) durch eine aufgelockerte Struktur nach Art eines Maschengewebes verstärkt ist.

6. Flexibles Entkopplungselement gemäß Anspruch 5, **dadurch gekennzeichnet, daß** die Verstärkung der Schicht (24) aus wärmeleitendem Material besteht.

7. Flexibles Entkopplungselement gemäß einem der vorhergehenden Ansprüche, **dadurch gekennzeichnet, daß** die biegsame Schicht (24) der zentralen Zone des Dichtungsteils (11) leicht gefaltet ist.

8. Flexibles Entkopplungselement gemäß Anspruch 7, **dadurch gekennzeichnet, daß** eine Feder (R3) die biegsame Schicht (24) umgibt, um ihr eine gefaltete Form zu geben.

9. Flexibles Entkopplungselement gemäß einem der vorhergehenden Ansprüche, **dadurch gekennzeichnet, daß** ein verformbares und wärmeleitendes Element (33) außen oder innen die biegsame Schicht (24) umgibt.

10. Flexibles Entkopplungselement gemäß einem der vorhergehenden Ansprüche, **dadurch gekennzeichnet, daß** die biegsame Wand (24) einen äußeren Durchmesser in der Größenordnung von 0, 5 bis 2 oder 3 mal dem äußeren Durchmesser des Auspuffrohrs aufweist, an dem das flexible Element bestimmt ist angebaut zu werden, und eine Länge in der Größenordnung von 30 bis 100 mm oder 0,5 bis 1,5 mal ihres eigenen äußeren Durchmessers.

11. Flexibles Entkopplungselement gemäß einem der vorhergehenden Ansprüche, **dadurch gekennzeichnet, daß** jede Endzone (23) des Dichtungsteils in der Form einer Haube (25) ausgeführt ist.

12. Flexibles Entkopplungselement gemäß Anspruch 11, **dadurch gekennzeichnet, daß** jede Haube (25) eine Dicke in der Größenordnung von 0,2 bis 1 mm und eine Länge in der Größenordnung von 0,5 bis 2 mal dem äußeren Durchmesser des Auspuffrohrs aufweist, an dem das flexible Element bestimmt ist angebaut zu werden.

13. Flexibles Entkopplungselement gemäß Anspruch 11 oder 12, **dadurch gekennzeichnet, daß** jede Haube (25) Kühlrippen (A) trägt.

14. Flexibles Entkopplungselement gemäß einem der Ansprüche 11 bis 13, **dadurch gekennzeichnet, daß** jede Haube (25) in einem wenig wärmeleitenden Material ausgeführt ist.

15. Flexibles Entkopplungselement gemäß einem der vorhergehenden Ansprüche, **dadurch gekennzeichnet, daß** die Endzonen (15) des mechanischen Teils (10) des flexiblen Elementes aus zwei metallischen röhrenförmigen Ansatzstücken (15a) gebildet werden, die miteinander durch eine zentrale biegsame Verbindung (16) verbunden sind, die kantige Verschwenkungen des flexiblen Elementes gestattet.

16. Flexibles Entkopplungselement gemäß Anspruch 15, **dadurch gekennzeichnet, daß** der Dichtungsteil (11) sich axial jenseits der zentralen biegsamen Verbindung (16) erstreckt.

17. Flexibles Entkopplungselement gemäß Anspruch 15 oder 16, **dadurch gekennzeichnet, daß** die biegsame Verbindung (16) des mechanischen Teils (10) des flexiblen Elementes ein Gewebe aus Fasern oder Drähten aus rostfreiem Stahl einschließt, um eine dünne, dichte und widerstandsfähige Einlage einer Dicke in der Größenordnung von 5 mm bis 10 mm zu bilden.

18. Flexibles Entkopplungselement gemäß einem der Ansprüche 15 oder 16, **dadurch gekennzeichnet, daß** die biegsame Verbindung (16) des mechanischen Teils (10) des flexiblen Elementes eine ausgerichtete Struktur beispielsweise aus langen Fasern aus rostfreiem Stahl einschließt.

19. Flexibles Entkopplungselement gemäß einem der Ansprüche 15 oder 16, **dadurch gekennzeichnet, daß** die biegsame Verbindung (16) des mechanischen Teils (10) des flexiblen Elementes zwischen zwei alternierenden Federn (R1, R2) eingeschlossen ist, um ihr die Form eines Faltenbalgs zu geben.

20. Flexibles Entkopplungselement gemäß Anspruch 19, **dadurch gekennzeichnet, daß** die biegsame Verbindung (16) des mechanischen Teils (10) des flexiblen Elementes aus einer Feder (R4) aus Metalldraht mit einer Dicke in der Größenordnung von 7 mm bis 14 mm gebildet wird.

21. Flexibles Entkopplungselement gemäß Anspruch 20, **dadurch gekennzeichnet, daß** die Feder (R4) auf der Innenseite des flexiblen Elementes angebracht und von dem Wärmeisolationsteil (12) umgeben ist.

22. Flexibles Entkopplungselement gemäß Anspruch 21, **dadurch gekennzeichnet, daß** eine innere Umhüllung (36) in Form einer Folie aus rostfreiem Stahl geringer Dicke zwischen der Feder (R4) und dem Wärmeisolationsteil (12) eingeschaltet ist.

23. Flexibles Entkopplungselement gemäß Anspruch 21 oder 22, **dadurch gekennzeichnet, daß** die Feder (R4) einen röhrenförmigen Abweiser (37) umgibt, der in Berührung mit den Auspuffgasen ist.

24. Flexibles Entkopplungselement gemäß Anspruch 22, **dadurch gekennzeichnet, daß** der Abweiser (37) aus zwei Teilen ist, die jeweils mit den beiden starren Endzonen (15) des flexiblen Elementes verbunden sind.

25. Flexibles Entkopplungselement gemäß Anspruch 23, **dadurch gekennzeichnet, daß** der Abweiser (37) aus einem Teil ist, das mit einer der starren Endzonen (15) des flexiblen Elementes verbunden ist.

26. Flexibles Entkopplungselement gemäß Anspruch 20, **dadurch gekennzeichnet, daß** die Feder (R4) an der Außenseite des flexiblen Elementes angebracht ist und den Dichtungsteil (11) umgibt.

27. Flexibles Entkopplungselement gemäß Anspruch 26, **dadurch gekennzeichnet, daß** der Dichtungsteil (11) durch eine innere Umhüllung (40) von geringer Dicke vervollständigt wird, die von dem Isolationsteil (12) umgeben und an einer der starren Endzonen (15a1) des flexiblen Elementes befestigt ist.

28. Flexibles Entkopplungselement gemäß einem der vorhergehenden Ansprüche, **dadurch gekennzeichnet, daß** der Wärmeisolationsteil (11) ausgehend von einem isolierenden Material von einer Dicke in der Größenordnung von 5 mm bis 20 mm ausgeführt ist, und sich auf der ganzen Länge des Dichtungsteils (11) des flexiblen Elementes erstreckt.

## Claims

1. A decoupling sleeve for mounting in a motor vehicle engine exhaust pipe (LE), the sleeve (5) comprising in particular a mechanical portion (10) having two rigid end zones (15) for connection to the exhaust pipe (LE), and a sealing portion (11) that is thermally insulated from the inside by an insulation portion (12), the sealing portion extending over substantially the entire length of the mechanical portion (10) of the sleeve, and comprising at least a central zone (22) formed by a layer or wall (24) made of a material that is flexible and that withstands temperature, the sleeve being **characterized in that** in order to form a covering that is continuous, closed, and leakproof, the sealing portion also comprises two long and thin, rigid end zones (23) having the function of thermally protecting the central zone (22) by insulating it from the hot connection zones between the sleeve and the exhaust pipe, and which are respectively connected firstly to the central zone (22) and secondly to the two rigid end zones (15) of the mechanical portion (10).

2. A decoupling sleeve according to claim 1, **characterized in that** the mechanical and sealing portions (10, 11) are dissociated from each other so as to perform their respective functions independently of each other.

3. A decoupling sleeve according to claim 1 or 2, **characterized in that** the flexible layer (24) of the central zone of the sealing portion (11) is about 0.5 mm to 2 mm thick.

4. A decoupling sleeve according to any one of claims 1 to 3, **characterized in that** the flexible layer (24) of the central zone of the sealing portion is made of an elastomer material such as silicone.

5. A decoupling sleeve according to any preceding claim, **characterized in that** the flexible layer (24) of the central zone of the sealing portion (11) is reinforced by a perforated structure of the knit type.

6. A decoupling sleeve according to claim 5, **characterized in that** the reinforcement of the layer (24) is made of a material that conducts heat.

7. A decoupling sleeve according to any preceding claim, **characterized in that** the flexible layer (24) of the central zone of the sealing portion (11) is lightly folded.

8. A decoupling sleeve according to claim 7, **characterized in that** a spring (R3) surrounds the flexible layer (24) to give it a folded shape.

9. A decoupling sleeve according to any preceding claim, **characterized in that** a deformable and thermally conductive element (33) surrounds the flexible layer (34) internally or externally.

10. A decoupling sleeve according to any preceding claim, **characterized in that** the flexible wall (24) has an outside diameter that is about 0.5 to 2 or 3 times the outside diameter of the exhaust pipe segment in which the sleeve is designed to be mounted, and a length that is about 30 mm to 100 mm, i.e. 0.5 to 1.5 times its own outside diameter.

11. A decoupling sleeve according to any preceding claim, **characterized in that** each end zone (23) of the sealing portion is made in the form of a cover (25).

12. A decoupling sleeve according to claim 11, **characterized in that** each cover (25) is about 0.2 mm to 1 mm thick and has a length that is about 0.5 to 2 times the outside diameter of the exhaust pipe segment in which the sleeve is designed to be mounted.

13. A decoupling sleeve according to claim 11 or 12, **characterized in that** each cover (25) supports cooling fins (A).

14. A decoupling sleeve according to any one of claims 11 to 13, **characterized in that** each cover (25) is made of a material that is a poor conductor of heat.

15. A decoupling sleeve according to any preceding claim, **characterized in that** the end zones (15) of the mechanical portion (10) of the sleeve are constituted by two metal tubular endpieces (15a) which are united with each other by a flexible central link (16) that enables the sleeve to be deformed angularly.

16. A decoupling sleeve according to claim 15, **characterized in that** the sealing portion (11) extends axially beyond the flexible central link (16).

17. A decoupling sleeve according to claim 15 or 16, **characterized in that** the flexible link (16) of the mechanical portion (10) of the sleeve includes fabric made of stainless steel wires or fibers to form a mat that is thin, dense, and strong, having a thickness of about 5 mm to 10 mm.

18. A decoupling sleeve according to claim 15 or 16, **characterized in that** the flexible link (16) of the mechanical portion (10) of the sleeve includes an oriented structure of long fibers made of stainless steel, for example.

19. A decoupling sleeve according to claim 15 or 16, **characterized in that** the flexible link (16) of the mechanical portion (10) of the sleeve is held captive between two interleaved springs (R1, R2) to give it a bellows shape.

20. A decoupling sleeve according to claim 19, **characterized in that** the flexible link (16) of the mechanical portion (10) of the sleeve is constituted by a spring (R4) of a metal wire that is about 7 mm to 14 mm thick.

21. A decoupling sleeve according to claim 20, **characterized in that** the spring (R4) is situated on the inside of the sleeve and is surrounded by the thermal insulation portion (12).

22. A decoupling sleeve according to claim 21, **characterized in that** an inner covering (36) in the form of a thin stainless steel foil is interposed between the spring (R4) and the thermal insulation portion (12).

23. A decoupling sleeve according to claim 21 or 22, **characterized in that** the spring (R4) surrounds a tubular deflector (37) which comes into contact with exhaust gases.

24. A decoupling sleeve according to claim 22, **characterized in that** the deflector (37) is made up of two portions connected respectively to the two rigid end zones (15) of the sleeve.

25. A decoupling sleeve according to claim 23, **characterized in that** the deflector (37) comprises a single portion which is connected to one of the rigid end zones (15) of the sleeve.

26. A decoupling sleeve according to claim 20, **characterized in that** the spring (R4) is situated on the outside of the sleeve and surrounds the sealing portion (11).

27. A decoupling sleeve according to claim 26, **characterized in that** the sealing portion (11) also includes an inner covering (40) of small thickness which is surrounded by the insulation portion (12) and which is fixed to one of the rigid end zones (15a₁) of the sleeve.

28. A decoupling sleeve according to any preceding claim, **characterized in that** the thermal insulation portion (11) is made of an insulating material and has thickness of about 5 mm to 20 mm, extending over the entire length of the sealing portion (11) of the sleeve.
